# EUROPÄISCHE PATENTSCHRIFT

(11) **EP 1 998 998 B1**
(45) Veröffentlichungstag und Bekanntmachung des Hinweises auf die Patenterteilung: **26.05.2010**
(21) Anmeldenummer: 07818082.5
(22) Anmeldetag: 10.09.2007
(51) Int. Cl.: B61C 7/04, B60K 6/12

(54) **SCHIENENFAHRZEUGANTRIEB UMFASSEND EINE VERBRENNUNGSMASCHINE UND EINE HYDROSTATISCHE BREMS- UND ANTRIEBSEINHEIT**
RAIL VEHICLE DRIVE COMPRISING AN INTERNAL COMBUSTION ENGINE AND A HYDROSTATIC BRAKE AND DRIVE UNIT
SYSTÈME D'ENTRAÎNEMENT D'UN VÉHICULE FERROVIAIRE COMPRENANT UN MOTEUR À COMBUSTION INTERNE ET UNE UNITÉ DE FREINAGE ET D'ENTRAÎNEMENT HYDROSTATIQUE

(30) Priorität: 11.09.2006 DE 102006043227
(43) Veröffentlichungstag der Anmeldung: 10.12.2008
(73) Patentinhaber: Voith Turbo GmbH & Co. KG, 89522 Heidenheim (DE)
(72) Erfinder: BARTOSCH, Stephan, 89192 Rammingen (DE); BERGER, Jürgen, 89547 Gerstetten (DE); GRIESER, Jens, 89555 Söhnstetten (DE)
(74) Vertreter: Weitzel, Wolfgang
(86) Internationale Anmeldenummer: PCT/EP2007/007857
(87) Internationale Veröffentlichungsnummer: WO 2008/031541

(56) Entgegenhaltungen:
- EP-A- 0 248 178
- FR-A- 2 467 095
- US-A1- 2006 068 970
- HEWKO L O ET AL: "Hydraulic Energy Storage Based Hybrid Propulsion System For A Terrestrial Vehicle" CONFERENCE PROCEEDINGS ARTICLE, Bd. 4, 12. August 1990 (1990-08-12), Seiten 99-105, XP010301251

## Beschreibung

Die Erfindung betrifft einen Schienenfahrzeugantrieb, insbesondere einen Schienenfahrzeugantrieb gemäß des Oberbegriffs von Anspruch 1.

Antriebe von Schienenfahrzeugen, welche eine Verbrennungskraftmaschine, üblicherweise einen Dieselmotor, umfassen, finden insbesondere Anwendungen bei Triebwagen und Güterzuglokomotiven. Bei Triebwagen ist die Verbrennungskraftmaschine und das zugeordnete Traktionsgetriebe sowie ein Wendegetriebe vorzugsweise als kompakte Antriebseinheit ausgebildet, welche in einem Traggestell mit dem Radsatz kombiniert werden kann, um einen platzsparenden Antrieb unter der Fahrgastzelle zu realisieren.

Für Traktionsgetriebe von Schienenfahrzeugen sind sowohl mechanische Ausgestaltungen, als auch Getriebe mit wenigstens einem hydrodynamischen Kreislauf bekannt - auch mechanisch/hydrodynamische Kombinationen sind denkbar. Hierbei wird meist die Verbindung einer hydrodynamischen Kupplung und eines hydrodynamischen Wandlers verwendet, welche so ausgelegt sind, dass sie, ausgehend von einer Übereinstimmung der mechanischen Übersetzung, in zwei aneinander angrenzenden Geschwindigkeitsbereichen mit einem guten Wirkungsgrad betrieben werden können. Das an die Sekundärseite des Traktionsgetriebes in der Kraftflussrichtung nachfolgende Wendegetriebe dient dem Fahrrichtungswechsel und kann beim Stillstand des Fahrzeugs geschaltet werden.

US 2006/068970 A1 beschreibt einen hydrostatischen Sekundärantrieb, der abkoppelbar an der Getriebe-Primärseite eines Fahrzeugantriebes angeordnet ist. Dabei ist zum Ankoppeln eine Getriebestufe vorgesehen.

Nachteilig an den bisher bekannten Schienenfahrzeugantrieben mit einer Verbrennungskraftmaschine in Kombination mit einem Traktions- und Wendegetriebe ist zum einen der Umstand, dass beim Bremsen des Schienenfahrzeugs die Bremsenergie nicht zurückgewonnen wird. Neben der hieraus resultierenden Ressourcenverschwendung entstehen unnötige zusätzliche Schadstoffemissionen. Zum anderen befindet sich der im Bereich des Fahrgestells angeordnete Verbrennungsmotor im Außenbereich des Schienenfahrzeugs. Hieraus resultiert eine hohe Geräuschemission, was insbesondere beim Ein- und Ausfahren in einen Bahnhof nachteilig ist. Ferner ist für einen konventionellen Antrieb eines Schienenfahrzeugs mit einer Verbrennungskraftmaschine dieser bezüglich der Dimensionierung so auszulegen, dass für das Anfahren sowie für die Volllast bei Maximalgeschwindigkeit ein hinreichend hohes Antriebsmoment zur Verfügung steht. Dies führt zu Verbrennungskraftmaschinen mit hoher Leistung sowie einer entsprechenden Auslegung der nachfolgenden Getriebekomponenten, insbesondere der hydrodynamischen Kreisläufe im Traktionsgetriebe.

Der Erfindung liegt daher die Aufgabe zugrunde, einen gattungsgemäßen Schienenfahrzeugantrieb, mit einer Verbrennungskraftmaschine sowie einem nachfolgenden Traktions- und Wendegetriebe, im Hinblick auf die Rückgewinnung von Bremsenergie, die Verringerung von Abgas- und Geräuschemissionen sowie bezüglich des Verhältnisses aus Bauraum und Gewicht zum einen und aus maximal aufbringbarem Moment zum anderen zu verbessern.

Diese Aufgabe wird mittels der kennzeichnenden Merkmale von Anspruch 1 gelöst.

Betrieben wird die Hydrostatikverstellmotor/Pumpeneinheit mittels eines Arbeitsmediums, typischerweise einem Hydrauliköl, welches aus einer Speichereinheit für das Arbeitsmedium gespeist wird. Diese umfasst einen Niederdruckspeicher und einen Hochdruckspeicher, wobei mittels einer zugeordneten Ventileinheit während des Bremsens, bei dem die Hydrostatikverstellmotor/Pumpeneinheit als Pumpe wirkt, der Hochdruckspeicher beladen wird. Entsprechend wird bei der Zuschaltung der hydrostatischen Brems- und Antriebseinheit im Traktionsbetrieb des Schienenfahrzeugantriebs die Speichereinheit für das Arbeitsmedium entleert.

Erfindungswesentlich zur Realisierung der Anforderung, wonach die hydrostatische Brems- und Antriebseinheit zu allen Geschwindigkeitsbereichen neben der Verbrennungskraftmaschine für die Traktion des Schienenfahrzeugantriebs sowie zusätzlich in allen Fahrsituationen für das Bremsen verwendet werden kann, ist, dass die Hydrostatikverstellmotor/Pumpeneinheit mittels eines wenigstens zweistufigen Getriebes mit dem der Verbrennungskraftmaschine zugeordneten Getriebe verbunden ist. Hierbei wird vorteilhaft eine Wirkverbindung mittels einer Schaltkupplung hergestellt, welche, das wenigstens zweistufige Getriebe der Hydrostatikverstellmotor/Pumpeneinheit mit der Abtriebsseite des Traktionsgetriebes verbindet. Weist das Traktionsgetriebe einen hydrodynamischen Kreislauf auf, so wird bevorzugt eine Verbindung zur Sekundärseite des hydrodynamischen Kreislaufs hergestellt.

Die Zweistufigkeit des dem hydrostatischen Nebenantrieb zugeordneten Getriebes erlaubt es wenigstens eine Getriebestufe für niedrige Geschwindigkeiten zu verwenden und so insbesondere das Anfahren des Schienenfahrzeugs zu unterstützen. Eine zweite Getriebestufe kann dann einem hohen Geschwindigkeitsbereich zugeordnet werden, so dass auch unter Volliast der Verbrennungskraftmaschine bei Höchstgeschwindigkeit ein Zuschalten des hydrostatischen Nebenantriebs und ein Beschicken aus den Speichern für das Arbeitsmedium bei besonderen Lastanforderungen möglich ist.

In einer besonders vorteilhaften Ausgestaltung der Erfindung ist wenigstens ein zeitweiliger Antrieb des Schienenfahrzeugs im gesamten Geschwindigkeitsbereich vom Anfahren bis zur Maximalgeschwindigkeit in beiden Fahrtrichtungen rein mit dem hydrostatischen Nebenantrieb möglich. Dies erlaubt insbesondere ein leises Ein- und Ausfahren in Bahnhöfe sowie einer Durchfahrt von bewohnten Gebieten mit einem stark geräuschreduzierten Antrieb. Ferner kann bei einer besonders hohen Leistungsanforderung die Verbrennungskraftmaschine gleichzeitig mit dem hydrostatischen Nebenantrieb, etwa zur Beschleunigung beziehungsweise an einer Gleisstrecke mit starker Steigung, verwendet werden.

Nachfolgend wird ein Ausführungsbeispiel des erfindungsgemäßen Schienenfahrzeugantriebs anhand von Figuren dargestellt. In diesen ist im Einzelnen Folgendes dargestellt:
- Figur 1: zeigt die Ankopplung einer erfindungsgemäßen hydrostatischen Brems- und Antriebseinheit an die Sekundärseite eines hydrodynamischen Kreislaufs im Traktionsgetriebe eines Schienenfahrzeugantriebs.
- Figur 2: zeigt die Hydrostatikverstellmotor/Pumpeneinheit sowie die Ventileinheit und die Speichereinheit für das Arbeitsmedium der erfindungsgemäßen hydrostatischen Brems- und Antriebseinheit.
- Figur 3: zeigt eine Ausgestaltung der Ventileinheit der hydrostatischen Brems- und Antriebseinheit.
- Figur 4: zeigt einen Schienenfahrzeugantrieb mit einer Verbrennungskraftmaschine, einem Traktionsgetriebe und einem Wendegetriebe gemäß des Stands der Technik.

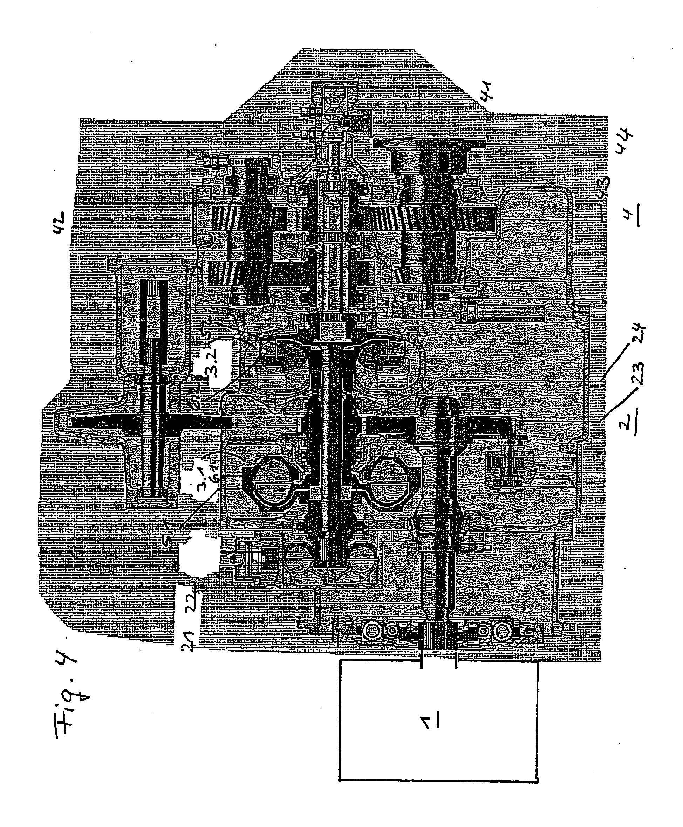

In der axialen Schnittdarstellung aus Figur 4 ist der schematische Aufbau eines konventionellen Schienenfahrzeugantriebs umfassend eine Verbrennungskraftmaschine 1 sowie ein Traktionsgetriebe 2 und ein Wendegetriebe 4 dargestellt. Hierbei verläuft der Kraftfluss im Traktionsbetrieb von der Verbrennungskraftmaschine 1 über eine drehelastische Kupplung 21 auf eine Eingangswelle 22 zum Traktionsgetriebe 2, welches in der dargestellten Ausgestaltung zwei hydrodynamische Kreisläufe umfasst - zum einen eine hydrodynamische Kupplung 3.1, zum anderen ein hydrodynamischer Wandler 3.2. Alternativ könnte eine oder mehrere Übersetzungsstufen als mechanische Gänge ausgebildet werden.

Für die dargestellte vorteilhafte Ausgestaltung sind die Kupplung und der Wandler so ausgelegt, dass sie ausgehend von einer übereinstimmenden mechanischen Übersetzung für aneinander anschließende Geschwindigkeitsbereiche einen guten Wirkungsgrad aufweisen. Die Umschaltung von der hydrodynamischen Kupplung 3.1 auf den hydrodynamischen Wandler 3.2 erfolgt über eine Befüllungssteuerung. Angetrieben werden die jeweiligen Primärseiten 5.1, 5.2 der hydrodynamischen Kreisläufe 3.1, 3.2 über ein Hochgangsritzel 24, das von einem auf der Eingangswelle 22 aufsitzenden Hochgangsrad 23 angetrieben wird.

Im Anschluss an die mechanisch/hydrodynamische Übersetzungsstufe im Traktionsgetriebe 2 erfolgt in Kraftflussrichtung für den Traktionsbetrieb ein Wendegetriebe 4, welches zur Auswahl der Fahrrichtung des Schienenfahrzeugs dient. Zum Einleiten eines Fahrtrichtungswechsels wird hierzu im Stillstand über den Wendeschaltzylinder 41 geschaltet, der in einer ersten Stellung den Kraftfluss für den nachfolgenden Traktionsbetrieb entweder unmittelbar auf die Abtriebsräder 43 und damit auf den Abtriebsflansch 44 leitet, an dem der Radsatz wenigstens mittelbar befestigt ist. In einer zweiten Stellung für die entgegengesetzte Fahrrichtung erfolgt der Kraftfluss zunächst über das Wenderad 42 und sodann auf das Abtriebsrad 43.

Der in Figur 4 dargestellte Fall einer Gesamtbaueinheit aus Traktions- und Wendegetriebe kann im Rahmen des fachmännischen Könnens abgewandelt werden. Insbesondere ist eine Ausgestaltung denkbar, bei der das Wendegetriebe als separate, nachgeschaltete Baueinheit vorgesehen ist, die beispielweise als Achsgetriebe angeordnet sein kann.

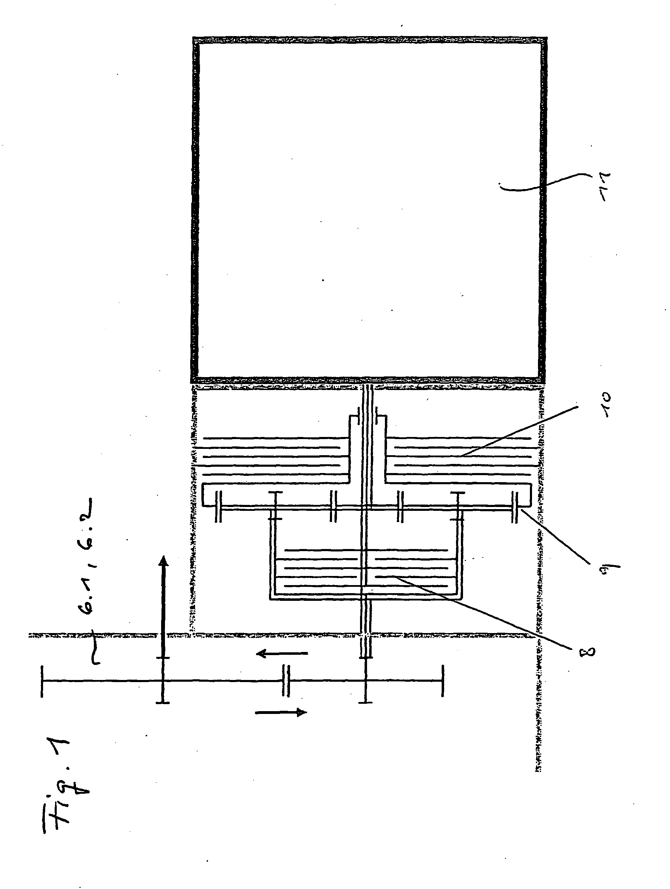

Figur 1 zeigt in schematisch vereinfachter Darstellung die Ankopplung des erfindungsgemäßen hydrostatischen Nebenantriebs an ein konventionelles Getriebe nachfolgend zu einer Verbrennungskraftmaschine zum Antrieb eines Schienenfahrzeugs. Gemäß der gezeigten Ausgestaltung wird eine Hydrostatikverstellmotor/Pumpeneinheit 11 verwendet, die für den zusätzlichen Traktionsantrieb motorisch und beim Bremsen als Pumpe für ein Arbeitsmedium, üblicherweise mit einem Hydrauliköl, betrieben wird. Als Hydrostatikverstellmotor/Pumpeneinheit 11 kann jede Hydraulikpumpen/Hydraulikmotorkombination verwendet werden, welche sowohl verstellbar ist, als auch für den Betrieb bei einem hohen Betriebsmitteldruck geeignet ist. Insbesondere wird hierfür eine Kolbenmaschine und besonders bevorzugt eine Schubkolbenmaschine verwendet.

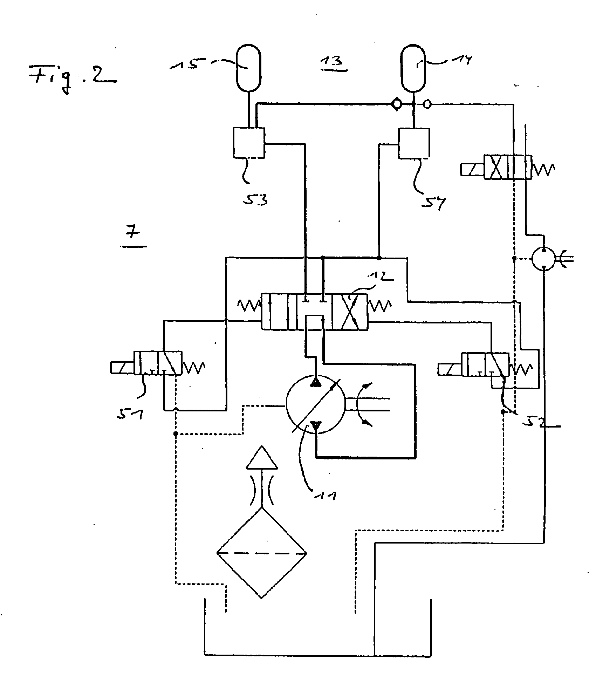

Die Kraftein- und auskopplung auf den hydrostatischen Nebenzweig erfolgt auf der Abtriebsseite 6.1, 6.2 des Traktionsgetriebes 2 über eine Schaltkupplung 8. Dargestellt ist eine Ausgestaltung der Schaltkupplung 8 als Lamellenkupplung. Zur Realisierung eines für alle möglichen Geschwindigkeitsbereiche vom Anfahren bis zur Maximalgeschwindigkeit des Schienenfahrzeugs einsetzbaren zusätzlichen Nebenantriebs, beziehungsweise einer in allen Geschwindigkeitsbereichen verwendbaren Bremseinrichtung mit Energierückgewinnung, wird die Hydrostatikverstellmotor/Pumpeneinheit 11 über ein wenigstens zweistufiges Getriebe 9 mit der Schaltkupplung 8 verbunden. In der schematischen Darstellung aus Figur 1 ist hierzu ein Planetenradgetriebe sowie eine zusätzliche Lamellenkupplung 10 als Bremse dargestellt. Durch diese Zweistufigkeit beziehungsweise die zur Ankopplung vorgesehenen Kupplungen ist es möglich, die Hydrostatikverstellmotor/Pumpeneinheit 11 sowohl für das Anfahren, als auch für einen zusätzlichen Unterstützungs- oder Soloantrieb bei hohen Geschwindigkeiten zu verwenden. Damit kann die während des Bremsens in einem Hydraulikspeicher zwischengespeicherte Energie in allen Fahrzuständen in die Traktion einfließen. Entsprechend kann die hydrostatische Brems- und Antriebseinheit 7 bei allen Geschwindigkeiten als Bremse verwendet werden. Zur entsprechenden Verschaltung dient hierzu das in Figur 2 dargestellte Ventilelement 12, was in der gezeigten Darstellung in Form eines 4/3-Wegeventils ausgebildet ist. Dies steuert den Strom des Betriebsmediums, wobei im Traktionsfall die Hydrostatikverstellmotor/Pumpeneinheit 11 motorisch durch ein Betriebsmittelstrom aus einem Niederdruckspeicher 14 betrieben wird, der wiederum mit dem Hochdruckspeicher 15, der als Energiespeicher dient, über die Ventileinheit 12 verbunden ist.

Zusätzlich sind in Figur 2 schematisch Ansteuerungskomponenten für die Ventileinheit 12 in Form der Hydraulikventile 51, 52 dargestellt. Ferner sind dem Hochdruckspeicher 15 und dem Niederdruckspeicher 14 jeweils die Sicherheitsblöcke 53 und 54 zugeordnet.

Als mögliche Ausgestaltungen des Niederdruckspeichers 14 und des Hochdruckspeichers 15 können hydrostatische Blasenspeicher gewählt werden. Alternativ können Kolbenspeicher zur Niederdruck- beziehungsweise Hochdruckspeicherung des Arbeitsmediums dienen.

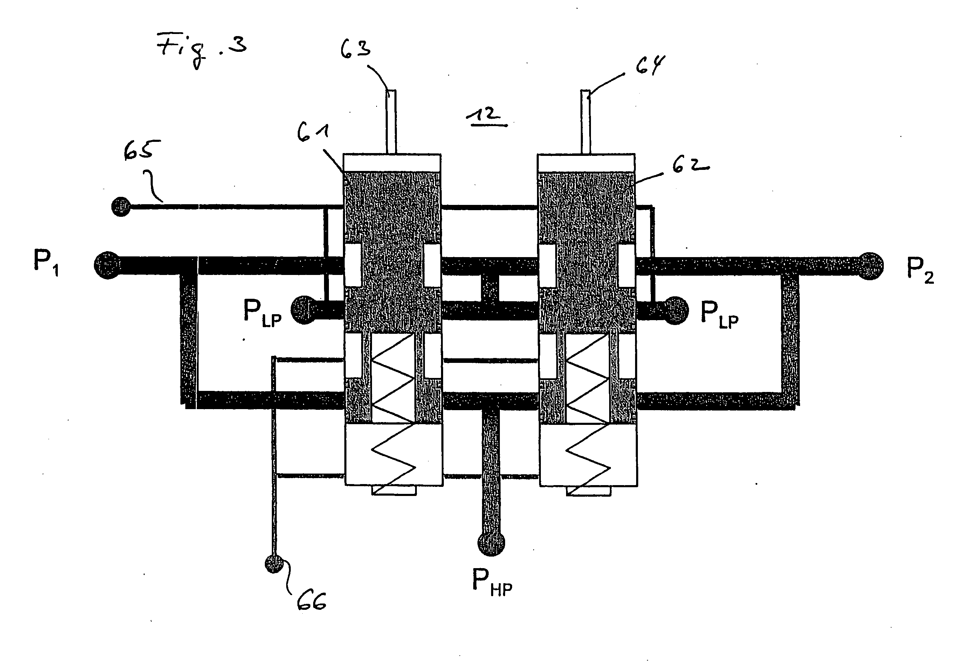

In Figur 3 ist eine mögliche Ausgestaltung der Ventileinheit 12 dargestellt. Gezeigt wird die Doppelanordnung zweier Längsschieberventile 63, 64 jeweils mit Federkraftrückführung. Diesen sind jeweils Vorsteuerventile 63, 64 zugeordnet sowie eine Speiseleitung 65 und eine Leckageleitung 66. Die mit P1 und P2 bezeichneten Zuleitungen führen zur Hydrostatikverstellmotor/Pumpeneinheit 11. Die Leitung zum Niederdruckspeicher wird mit P_{LP} und die Leitung zum Hochdruckspeicher wird mit P_{HP} bezeichnet.

Der erfindungsgemäße Schienenfahrzeugantrieb weist einen hydrostatischen Nebenantrieb auf, welcher in ein konventionelles Getriebe nachfolgend zu einer Verbrennungskraftmaschine für ein Schienenfahrzeug angekoppelt wird. Hierbei erfolgt die Kraftein und -ausleitung auf das konventionelle Getriebe über die Sekundärseite 6.1, 6.2 des Traktionsgetriebes 2 in Traktionsrichtung gesehen vor dem Wendegetriebe 4. Aufgrund der Verwendung eines unmittelbar einer Hydrostatikverstellmotor/Pumpeneinheit 11 zugeordneten, wenigstens zweistufigen Getriebes 9, mit wenigstens einer Schaltkupplung 8, ist es möglich, den hydrostatischen Nebenzweig sowohl bei Bremsen wie auch beim Traktionsbetrieb in allen Geschwindigkeitsbereichen zuzuschalten.

Beim Bremsen erfolgt ein Kraftfluss vom Traktionsgetriebe 2 über das zweistufige Getriebe 9 auf die Hydrostatikverstellmotor/Pumpeneinheit 11, welche dann im Pumpenbetrieb das Druckmedium in die Speichereinheit für das Arbeitsmedium 13 einpresst und somit der Rückgewinnung von Bremsenergie, gespeichert in einem Hochdruckspeicher 15 für ein hydraulisches Arbeitsmedium, dient.

Beim Anfahren aus dem Stand oder für jeden anderen Geschwindigkeitsbereich des Schienenfahrzeugs kann der hydrostatische Nebenantrieb als Soloantrieb oder in Verbindung zur Verbrennungskraftmaschine verwendet werden. Hierzu stellt die Ventileinheit 12 einen Fluss des Betriebsmediums zur Hydrostatikverstellmotor/Pumpeneinheit 11 her, wodurch diese motorisch betrieben wird. Entsprechend des vorliegenden Geschwindigkeitsbereichs wird eine bestimmte Gangstufe in dem wenigstens zweistufigen Getriebe 9 sowie eine Wirkverbindung zum Traktionsgetriebe 2 hergestellt. Sodann wird ein Antriebsmoment von der Hydrostatikverstellmotor/Pumpeneinheit 11 auf das Wendegetriebe und damit auf den Radsatz des Schienenfahrzeugs übertragen. Die für die Traktion notwendige Geschwindigkeit wird hierbei über eine Verstelleinrichtung der Hydrostatikverstellmotor/Pumpeneinheit 11 durch eine Anpassung des Schluck- und Fördervolumenstroms eingestellt.

Der erfindungsgemäße Schienenfahrzeugantrieb umfasst ferner eine im Einzelnen nicht dargestellte Steuerung für die Getriebekomponenten in Verbindung mit der Verbrennungskraftmaschine sowie die Getriebekomponenten, die dem hydrostatischen Nebenzweig zugeordnet sind. Ferner dient diese Steuerung zur Schaltung der Ventileinheit 12 sowie dem Energiemanagement für die Speichereinheit für das Arbeitsmedium 13. Zusätzlich sind für den hydrostatischen Nebenzweig im Rahmen des fachmännischen Könnens Absperrventile für den Stillstand sowie Druckbegrenzungsventile bei Vollbeladung des Hochdruckspeichers 15 vorgesehen. Ferner wird die über den hydrostatischen Nebenzweig erzielte Bremswirkung gemäß einer vorteilhaften Ausgestaltung durch zusätzliche Bremseinrichtungen in Form von Reibungsbremsen und hydrodynamischen Retardern ergänzt, die dann zum Einsatz kommen, wenn der Hochdruckspeicher 15 seine Maximalladung erreicht hat.

## Patentansprüche

1. Schienenfahrzeugantrieb, umfassend
1.1 eine Verbrennungskraftmaschine (1);
1.2 ein der Verbrennungskraftmaschine (1) zugeordnetes Getriebe zum Antrieb eines Schienenfahrzeug-Radsatzes mit einem Traktionsgetriebe (2) und einem Wendegetriebe (4);
1.3 eine hydrostatische Brems- und Antriebseinheit (7) mit einer Schaltkupplung (8) und einem wenigstens zweistufigen Getriebe (9), das eine Wirkverbindung zwischen der Schaltkupplung (8) und einer Hydrostatikverstellmotor/Pumpeneinheit (11) herstellt, wobei die Hydrostatikverstellmotor/Pumpeneinheit (11) über eine Ventileinheit (12) mit einer Speichereinheit mit einem Nieder- und Hochdruckspeicher für das Arbeitsmedium (13) in hydraulischer Verbindung steht;
**dadurch gekennzeichnet, dass**
1.4 die hydrostatische Brems- und Antriebseinheit (7) über die Schaltkupplung (8) an der Sekundärseite (6.1, 6.2) des Traktionsgetriebes (2) in Traktionsrichtung gesehen vor dem Wendegetriebe in schaltbarer Wirkverbindung zu dem der Verbrennungskraftmaschine (1) zugeordneten Getriebe steht;
1.5 beim Bremsen wird die Ventileinheit (12) so gesteuert, dass über die Hydrostatikverstellmotor/Pumpeneinheit (11) der Hochdruckspeicher (15) beladen wird;
1.6 beim Traktionsbetrieb mit der hydrostatischen Brems- und Antriebseinheit (7) wird die Ventileinheit (12) so gesteuert, dass die Hydrostatikverstellmotor/Pumpeneinheit (11) aus der Speichereinheit für das Arbeitsmedium (13) mit Arbeitsmedium zum Antrieb versorgt wird.

2. Schienenfahrzeugantrieb nach Anspruch 1, **dadurch gekennzeichnet, dass** das Traktionsgetriebe wenigstens einen hydrodynamischen Kreislauf (3.1, 3.2) umfasst, wobei die Schaltkupplung (8) mit der Sekundärseite des hydrodynamischen Kreislaufs (3.1, 3.2) in schaltbarer Wirkverbindung steht.

3. Schienenfahrzeugantrieb nach wenigstens einem der Ansprüche 1 oder 2, **dadurch gekennzeichnet, dass** das Schluck- oder Fördervolumen der Hydrostatlkverstellmotor/Pumpeneinheit (11) zur Drehzahlanpassung kontinuierlich veränderbar ist.

4. Schienenfahrzeugantrieb nach wenigstens einem der Ansprüche 1 bis 3, **dadurch gekennzeichnet, dass** als Hydrostatikverstellmotor/Pumpeneinhelt (11) eine Hubkolbenmaschine verwendet wird.

5. Schienenfahrzeugantrieb nach wenigstens einem der Ansprüche 1 bis 4, **dadurch gekennzeichnet, dass** als das wenigstens zweistufige Getriebe (9) ein Planetenradgetriebe mit einer Lamellenkupplung (10) als Bremse verwendet wird.

6. Schienenfahrzeugantrieb nach Anspruch 2, **dadurch gekennzeichnet, dass** der hydrostatische Kreislauf (3.1, 3.2) eine hydrodynamische Kupplung (3.1) oder ein hydrodynamischer Wandler (3.2) ist.

7. Schienenfahrzeugantrieb nach einem der Anspruche 1 bis 6, **dadurch gekennzeichnet, dass** der Niederdruckspeicher (14) und/oder der Hochdruckspeicher (15) als Blasenspeicher oder als Kolbenspeicher ausgebildet sind.

8. Verwendung eines Schienenfahrzeugantriebs nach einem der Ansprüche 1 bis 7 zum Antrieb eines Radsatzes für ein Schienenfahrzeug.

## Claims

1. A railway vehicle drive, comprising
1.1 an internal combustion engine (1);
1.2 a transmission associated with the internal combustion engine (1) for driving a railway vehicle wheelset with a traction drive transmission (2) and a reversing transmission (4);
1.3 a hydrostatic brake and drive unit (7) with a shifting clutch (8) and at least one two-step transmission (9) which produces an operative connection between the shifting clutch (8) and a hydrostatic shifting motor/pump unit (11), with the hydrostatic shifting motor/pump unit (11) being in hydraulic connection via a valve unit (12) with a storage unit with a low-pressure and high-pressure reservoir for the working medium (13);
**characterized in that**
1.4 the hydrostatic brake and drive unit (7) is in shiftable operative connection with the transmission associated with the internal combustion engine (1) via the shifting clutch (8) on the secondary side (6.1, 6.2) of the traction drive transmission (2) before the reversing transmission as seen in the direction of traction;
1.5 the valve unit (12) is controlled in such a way during braking that the high-pressure reservoir (15) is charged via the hydrostatic shifting motor/pump unit (11);
1.6 the valve unit (12) is controlled in such a way during traction operation with the hydrostatic brake and drive unit (7) that the hydrostatic shifting motor/pump unit (11) is supplied with working medium for drive from the storage unit for the working medium (13).

2. A railway vehicle drive according to claim 1, **characterized in that** the traction transmission comprises at least one hydrodynamic circuit (3.1, 3.2), with the shifting clutch (8) being in shiftable operative connection with the secondary side of the hydrodynamic circuit (3.1, 3.2).

3. A railway vehicle drive according to at least one of the claims 1 or 2, **characterized in that** the displacement or conveying volume of the hydrostatic shifting motor/pump unit (11) is continuously changeable for speed adjustment.

4. A railway vehicle drive according to at least one of the claims 1 to 3, **characterized in that** a reciprocating piston machine is used as a hydrostatic shifting motor/pump unit (11).

5. A railway vehicle drive according to at least one of the claims 1 to 4, **characterized in that** a planetary gear transmission with a multiple disk clutch (10) as a brake is used as the at least two-step transmission (9).

6. A railway vehicle drive according to claim 2, **characterized in that** the hydrostatic circuit (3.1, 3.2) is a hydrodynamic coupling (3.1) or a hydrodynamic converter (3.2).

7. A railway vehicle drive according to at least one of the claims 1 to 6, **characterized in that** the low-pressure reservoir (14) and/or the high-pressure reservoir (15) are arranged as a bladder accumulator or piston accumulator.

8. The use of a railway vehicle drive according to one of the claims 1 to 7 for driving a wheelset for a railway vehicle.

## Revendications

1. Unité de traction pour véhicule ferroviaire, comprenant :
1.1 un moteur thermique (1);
1.2 une transmission disposée dans le moteur thermique (1) pour l'entraînement d'un essieu de véhicule ferroviaire avec une transmission de traction (2) et une transmission réversible (4) ;
1.3 une unité de freinage et de traction hydrostatique (7) avec un embrayage (8) est une boîte de vitesses (9) à au moins deux rapports qui crée une liaison active entre l'embrayage (8) et une unité de moteur de réglage hydrostatique et de pompe (11), dans lequel l'unité de moteur de réglage hydrostatique et de pompe (11) est en liaison hydraulique par l'intermédiaire d'une unité de soupape (12) avec une unité d'accumulation comprenant un accumulateur à basse pression et un accumulateur à haute pression pour le fluide de travail (13),
**caractérisée en ce que**
1.4 l'unité de freinage et de traction hydrostatique (7) est en liaison active commutable avec la transmission associée au moteur thermique (1) par l'intermédiaire de l'embrayage (8) sur le côté secondaire (6.1, 6.2) de la transmission de traction (2) en amont de la transmission réversible dans le sens de la traction ;
1.5 lors du freinage, l'unité de soupape (12) est commandée de telle façon que l'accumulateur sous haute pression (15) soit chargé par l'unité de moteur de réglage hydrostatique et de pompe (11) ;
1.6 en traction avec l'unité de freinage et de traction hydrostatique (7), l'unité de soupape (12) est commandée de telle façon que l'unité de moteur de réglage hydrostatique et de pompe (11) fournisse du fluide de travail à l'unité de traction à partir de l'unité d'accumulation pour le fluide de travail (13).

2. Unité de traction pour véhicule ferroviaire selon la revendication 1, **caractérisée en ce que** la transmission de traction comprend au moins un circuit hydrodynamique (3.1, 3.2), l'embrayage (8) étant en liaison active commutable avec le côté secondaire du circuit hydrodynamique (3.1, 3.2).

3. Unité de traction pour véhicule ferroviaire selon l'une au moins des revendications 1 ou 2, **caractérisée en ce que** le volume d'aspiration ou de transport de l'unité de moteur de réglage hydrostatique et de pompe (11) peut être modifié en continu pour adapter la vitesse de rotation.

4. Unité de traction pour véhicule ferroviaire selon l'une au moins des revendications 1 à 3, **caractérisée en ce qu'**une machine à piston alternatif est utilisée comme unité de moteur de réglage hydrostatique et de pompe (11).

5. Unité de traction pour véhicule ferroviaire selon l'une au moins des revendications 1 à 4, **caractérisée en ce que** l'au moins une transmission à au moins deux rapports (9) utilisée comme frein est un engrenage à train planétaire avec un embrayage à disques multiples (10).

6. Unité de traction pour véhicule ferroviaire selon la revendication 2, **caractérisée en ce que** le circuit hydrostatique (3.1, 3.2) est un accouplement hydrodynamique (3.1) ou un convertisseur hydrodynamique (3.2).

7. Unité de traction pour véhicule ferroviaire selon l'une des revendications 1 à 6, **caractérisée en ce que** l'accumulateur à basse pression (14) et/ou l'accumulateur à haute pression (15) sont conçus comme des accumulateurs à membrane ou des accumulateurs à piston.

8. Utilisation d'une unité de traction pour véhicule ferroviaire selon l'une des revendications 1 à 7 pour l'entraînement d'un essieu pour un véhicule ferroviaire.
